(19) Europäisches Patentamt
European Patent Office
Office européen des brevets

(11) **EP 4 663 297 A1**

(12) **EUROPEAN PATENT APPLICATION**

(43) Date of publication:
**17.12.2025 Bulletin 2025/51**

(51) International Patent Classification (IPC):
***B01L*** (2006.01)

(21) Application number: **24182180.0**

(22) Date of filing: **14.06.2024**

(52) Cooperative Patent Classification (CPC):
**B01L 3/0293; F04B 13/00; F04B 17/03;**
**F04B 49/06; F04B 49/08; F04B 49/22; G01F 22/02;**
**G01N 35/00584; G01N 35/10;** B01L 2200/146;
B01L 2200/148; B01L 2400/0478; F04B 2207/02

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **TECAN Trading AG**
**8708 Männedorf (CH)**

(72) Inventors:
- **Autrey, Robert Claude**
  **Lenexa, 66215 (US)**
- **Morgan, Benjamin Wayne Jr**
  **Boulder Creek, 95006 (US)**

(74) Representative: **Troesch Scheidegger Werner AG**
**Schwäntenmos 14**
**8126 Zumikon (CH)**

(54) **AN ANALYTICAL INSTRUMENT HAVING A SYRINGE SIZE IDENTIFICATION FUNCTIONALITY**

(57)    An analytical instrument having a syringe size identification functionality including a syringe pump with syringe having size $V_{syri}$, an electric drive, a valve downstream of the syringe, a pressure sensor between the syringe and the valve, a constant downstream volume $V_c$ and a processor configured to control the electric drive to move the plunger from $L_0$ for detecting pressure P1 to a pressure detection position $L_d$ for detecting P2 using the pressure sensor. The processor is configured to calculate the theoretical pressure P2* using a modified version of Boyle's law: $P2^* = P1(V_{syri} + V_c)/(V_{syri}(1-x) + V_c)$ and compare the theoretical pressure P2* with the detected pressure P2, if the theoretical pressure P2* equals the detected pressure P2 then release the analytical system for use.

Fig. 7

**Description**

FIELD OF THE INVENTION

The current invention relates to an analytical instrument with a syringe pump and the instrument is provided with a syringe size identification functionality. A method for detecting the size of a syringe in the analytical instrument and a computer program for detecting the size of a syringe in the analytical instrument are disclosed.

BACKGROUND OF THE INVENTION

Analytical instruments such as laboratory automation apparatuses or diagnostic testing devices use liquid handling devices for preparing, or supplying the liquids required for operating the apparatuses. The liquid handling devices may include valves and pump units.

The diagnostic testing device may include, for example, High Performance Liquid Chromatography (HPLC), Gas Chromatography (GC), Mass Spectrometry (MS) devices or a combination thereof. An example for a laboratory automation apparatus may be a dilutor, a pipetting device or a sample preparation device such as a Solid Phase Extraction apparatus (SPE). Another example of a laboratory automation apparatus may be a synthesizer used for facilitating the synthesis of chemical molecules such as small molecules, peptides and/or large molecules such as DNA or RNA strands. Yet another example of a laboratory automation apparatus may be include a DNA sequencer. The laboratory automation apparatus may include a robotic system for sample loading or transport of labware and the robotic system may include a robotic pipetting system for aspirating and dispensing liquids.

The pump unit may include a syringe pump for providing the liquid supply in the analytical instrument including a syringe with a plunger that may be retracted or advanced in the syringe by a plunger rod driven by an electro-mechanical drive. The electro-mechanical drive typically includes an electric motor such as a stepper motor. A typical syringe pump requires the user to program in a desired volume for aspiration and/or dispense by specifying the number of steps the pump stepper motor takes for each syringe size. This requires the user to know the syringe dimensions such as the internal diameter and to calculate the number of steps required for each syringe size. When the size of the syringe in the syringe pump is changed, this would require the user to recalculate the number of steps the motor takes to obtain the desired volumes, for example a syringe with a larger diameter requires less steps compared to a syringe with a smaller diameter for dispensing the same volume. The user may have to manually adjust the parameters in the analytical instrument when changing the syringe in the syringe pump.

US20210121885A1 discloses a syringe identification system for use with a handheld positive displacement pipette including a color sensor that can detect the color printed onto the outside surface of a syringe that can be installed in the pipette. The color is unique to the syringe and a controller in the pipette is programmed to automatically set or adjust one or more operating parameters of the pipette based on the identified syringe size which is linked to the color coding.

DESCRIPTION OF THE INVENTION

The manual adjustment of the instrument parameters may lead to errors in the liquid handling when the programmed number of steps for the stepper motor for pumping a desired liquid volume is not matched with the installed syringe size. Furthermore, optical recognition of the syringe size using color coded syringes requires additional color sensors, dedicated lightning for illuminating the color codes that need to be additionally printed onto the syringe. This may increase the complexity of the device, add or modify the hardware components and increase the costs of the product.

It is an objective of the present invention to overcome the disadvantages of the prior art and provide an analytical instrument with an automatic syringe size identification functionality using the existing firmware without adding additional components. It is an objective to provide a simple method for detecting the size of a syringe in the analytical instrument using the existing firmware and finally a computer program is provided for executing the method.

Those objectives are solved by the independent claims, further exemplary embodiments are evident from the dependent claims and the following description including the Figures.

A first aspect relates to an analytical instrument or laboratory automation apparatus having a syringe size identification functionality. The analytical instrument includes a syringe pump with a syringe having size $V_{syri}$, an electric drive, a valve downstream of the syringe, a pressure sensor between the syringe and the valve, a constant downstream volume $V_c$, and a processor configured to control the electric drive to move the plunger from $L_0$ for detecting pressure P1 to a pressure detection position $L_d$ for detecting P2 using the pressure sensor. The processor is configured to calculate the theoretical pressure P2* using a modified version of Boyle's law: $P2^* = P1(V_{syri} + V_c)/(V_{syri}(1-x) + V_c)$ and compare the theoretical pressure P2* with the detected pressure P2, if the theoretical pressure P2* equals the detected pressure P2 then release the analytical system for use.

The analytical instrument includes a syringe pump with an installed syringe having a size or volume $V_{syri}$. The analytical system further includes an electric drive for advancing or retracting a plunger in the syringe, a valve located downstream of the syringe and a pressure sensor located between the syringe and the valve. Downstream is defined here by the flow direction of a the liquid or gas, thus the direction of fluid entry is upstream whereas the direction of fluid discharge is downstream. The downstream or dead volume between the syringe or the outlet of the syringe and the valve defines a known and constant volume $V_c$. A control unit including a controller with a processor is operatively connected to the valve, the pressure sensor and the electric drive. The control unit provides control over the closure or opening of the valve and the control unit may receive and monitor the signals from the sensor for detecting the pressure in the syringe. The control unit may control the electric drive for pressurizing or depressurizing the syringe by advancing or retracting the plunger in the syringe. The control unit may include a storage unit for storing data, the data may be factory installed and predefined, or the data may be computed and stored in the unit during use of the instrument. The processor in the control unit is configured to control the electric drive for advancing the plunger from a position $L_0$ for detecting atmospheric pressure or a first pressure P1 of air or another gas, to a pressure detecting position $L_d$ for detecting the pressure of the compressed gas using the pressure sensor. The processor is further configured to calculate the fraction x for the plunger movement to the pressure detection position $L_d$ as: $x = (L_d-L_0)/L_{max}$ whereby $L_{max}$ represents the maximum available plunger movement provided by the electric drive or the maximum available plunger movement available in the barrel of the syringe before reaching a hard stop. The theoretical pressure P2* for the plunger movement to the pressure detection position $L_d$ is computed for the installed syringe $V_{syri}$ by the processor using a non-linear modification of Boyle's law:

$$P2^* = P1(V_{syri} + V_c)/(V_{syri}(1-x) + V_c)$$

Pressure P1 may be atmospheric pressure or an elevated pressure that is below the pressure value P2. The control unit may store the theoretical pressure P2* in the storage unit and the processor may furthermore compare the theoretical pressure P2* with the detected pressure P2. The control unit is configured to release the analytical system or instrument if the theoretical pressure P2* equals the detected pressure P2 for the installed syringe $V_{syri}$ and the instrument is ready for use. The release may be a release from a blocked position or configuration where the user cannot or at least partially cannot use the instrument. Alternatively, the release involves notifying to the user via the user interface that the instrument is ready for use. The processor in the control unit is configured to compare the detected pressure P2 with a lookup table stored in the storage device of the control unit, the lookup table comprises theoretical pressures P2** attributed to a list of different syringe sizes $V_{syr}$ intended to be used in the syringe pump if the theoretical pressure P2* deviates or substantially deviates from the detected pressure P2. The deviation between the detected pressure P2 and the calculated theoretical pressure P2* is preferably above the tolerance level of the pressure sensor used. If the theoretical pressure P2* deviates or substantially deviates from the detected pressure P2 then the syringe pump is recalibrated by adjusting the parameters for the electric drive according to the syringe size $V_{syr}$ where there is a match between the theoretical pressures P2** from the lookup table and the detected pressure P2. The theoretical pressures P2** are calculated according to the modified Boyle's equation as listed above whereby the constant volume $V_c$ is added to the volume of each syringe $V_{syr}$: P2** =P1($V_{syr} + V_c)/(V_{syr}(1-x) + V_c$). The syringe sizes $V_{syr}$ are selected from a range of syringes intended to be used in the analytical instrument.

The constant volume $V_c$ provides a non-linear modification to the Boyle's equation when comparing different syringe sizes. The ratio between the constant volume $V_c$ and the syringe volume $V_{syr}$ defines the impact of the constant volume $V_c$ on the modified Boyle's equation and to what extend the additional volume can differentiate between the different syringe sizes in a range of syringe sizes.

The analytical system or apparatus having the syringe size identification functionality utilizes the available hardware/software of the instrument without adding additional components such as optical sensors and color-coded products and therewith provides a simple method for identifying the syringe size, and where needed, for correcting the drive parameters for the syringe pump. The syringe size identification utilizes air for determining the syringe size and this is readily available before filling the syringe pump with the liquid normally used in the instrument. Furthermore, the syringe identification step can be automatically executed and does not require manual correction of the syringe size reducing human errors when using the instrument.

The plunger in the syringe of the syringe pump is advanced by a plunger rod driven by the electric drive and the electric drive includes an electric motor and may include a gearing mechanism coupling the output shaft of the electric motor to the plunger rod. The plunger may be attached to the distal end of the plunger rod and the plunger tightly fits into the barrel of the syringe for an air- and/or liquid-tight closure of the syringe. The plunger rod may be advanced by a nut-and-bolt mechanism whereby either the nut is rotated by the electric drive for advancing a non-rotating plunger rod including the bolt, or alternatively, the threaded plunger rod is rotated as a bolt and advanced through a non-rotating nut. The electric motor may be a stepper motor, for example a Direct Current (DC) stepper motor, or a brushless DC motor or a linear motor.

In an embodiment, the forward movement of the plunger rod in the analytical instrument is controlled by the number of commutating steps directed to the stepper motor thereby defining a pressure sweep P2-P1 and the number of commutating steps required for the pressure sweep is listed in the lookup table for each syringe size $V_{syr}$ from the range of syringe sizes intended to be used in the instrument. The number of commutating steps defines the number of rotations of the output shaft of the electric motor and defines, via the optional gearing mechanism and/or nut-bolt mechanism, the linear advancement of the plunger rod towards the pressure detection position $L_d$.

The recalibration of the syringe pump may include linking the number of commutating steps to be directed to the electric motor to the specific syringe size $V_{syr}$ from the listed syringe sizes where there is a match between the theoretical pressures P2** and the detected pressure P2. As a consequence, the pressure sweep defined by the advancement of the plunger in the syringe is corrected. Thus for the installed syringe with volume $V_{syri}$, the detected pressure P2 by the pressure sensor may deviate from the calculated pressure P2* based on the plunger advancement using the drive parameters before correction. The linear advancement originally programmed may not fit to the installed syringe size $V_{syri}$ as this would lead immediately to a match between the detected pressure P2 and the calculated pressure P2*. The look-up table with a list of calculated pressure values P2** that are each linked to a different syringe size, and which are each linked to the correct number of commutating steps for the stepper motor, is used for correcting the drive mechanism to the size of the installed syringe.

The syringe in a syringe pump may have to be exchanged either due to normal wear (for example when the pump is leaking) or if the user intends to replace the installed syringe for a syringe with a different size. The user may install a syringe with a different size compared to the previously installed syringe and the automatic recalibration ensures safe and reliable operation of the syringe pump and therewith contribute to the safe and reliable operation of the instrument The analytical instrument may further include an automatic syringe leakage detecting system.

The known and constant volume $V_c$ may be defined by the tubing or connectors connecting the syringe to the valve, the dead volume in the valve and the dead volume in the pressure sensor. The constant volume is in principle constant for the range of syringes to be installed in the instrument. The constant volume $V_c$ may be adjusted such that a larger constant volume may be used in combination with a different range of larger syringes and a smaller constant volume may be used in combination with a different range of smaller syringes. The syringe size identification functionality may thus be operated under optimal conditions for both ranges as the ratio between the constant volume and the installed syringe volume is preferably greater then 0.05 more preferably greater then 0.1 and most preferably greater than 0.2.

The syringe pump in the analytical system may be automatically recalibrated if the theoretical pressure P2* deviates from the detected pressure P2. Thereby providing safe and accurate operation of the syringe pump.

The syringe pump is preferably filled with air or a different gas such as nitrogen for the syringe size identification testing before being filled with the liquid normally used in the analytical apparatus. The syringe pump is filled with a gas as this ensures that the non-linear modification of Boyle's equation can be used for the syringe identification testing.

The syringe size identification testing in the analytical system or instrument may be periodically performed or performed upon replacing the syringe in the syringe pump.

The control unit of the analytical system may be configured to issue an acoustic and/or visual alarm if the theoretical pressure P2* deviates from the detected pressure P2 and/or the controller may issue an acoustic and/or visual notification if the theoretical pressure P2* equals the detected pressure P2. The results for the testing, whether upon replacement of the syringe, during periodic testing, or automatic testing upon starting the system may be stored in a logbook of the storage unit of the controller.

The syringe size in the analytical instrument may vary between 10 µl and 50.000 µl. The pressure sensor is preferably installed downstream of the outlet of the syringe, the pressure sensor may be incorporated in the valve, for example in a stator of a rotary valve.

The controller may monitor the motor current (MC) that is used by the stepper motor for keeping the plunger in the pressure detection position $L_d$. The stepper motor of the electric drive advances the plunger rod in the syringe from an initial position $L_0$ where there is pressure P1, for example atmospheric pressure, in the syringe to a pressure detection position $L_d$ thereby pressurizing the air in the syringe to pressure P2 as the valve is closed. The compressed air in the syringe provides a reaction force on the plunger, on the plunger rod and on the electric drive that needs to be compensated for keeping the plunger in the pressure detection position. The reaction force can be calculated by multiplying the detected pressure P2 (in $N/mm^2$) with the surface area A (in $mm^2$) of the plunger or by multiplying the detected pressure P2 with the cross-sectional surface area of the barrel of the syringe. The detection of the motor current may provide a second indication of the pressure within the syringe. A higher reaction force may require a higher motor current value MC for keeping the plunger rod in the pressure detection position $L_d$. The motor current required, or the theoretical motor current required for a certain syringe size may be stored in the storage unit and may be part of the factory settings.

The lookup table stored in the storage unit may include predefined motor current values MC* that are attributed to each syringe size $V_{syr}$ and the syringe pump may be recalibrated if:

a) the received motor current MC deviates from the predefined motor current value MC*, and/or

b) when the difference in theoretical pressures P2** in the lookup table between two subsequent syringe sizes $V_{syr}$ is in the same order of magnitude as the tolerance value of the pressure sensor.

For example, the pressure sensor used may have a tolerance value of +/- 0.1 Bar and the difference in theoretical pressures between two subsequent syringe sizes may be 0.1 to 0.3 Bar, and in that case using the syringe size identification solely based on the pressure sensor may become less reliable. The motor current MC detected for keeping the plunger in the pressure detection position may be used for identifying the correct syringe size.

The recalibration of the syringe pump using the motor current includes attributing or linking the number of commutating steps of the electric motor to the syringe size $V_{syr}$ where there is a match between the predefined motor current value MC* and the received motor current value MC.

Another aspect of the invention relates to a method for detecting the size of a syringe in an analytical instrument whereby the analytical instrument includes a syringe pump with an installed syringe having a volume $V_{syri}$, a valve located downstream of the syringe, a pressure sensor located between the valve and the syringe, a known and constant volume $V_c$ representing the downstream volume between the syringe and the valve, an electric drive for advancing or retracting a plunger in the syringe and a control unit comprising a processor for controlling the analytical instrument. The method includes the following steps:

- providing air or another gas in the syringe pump at atmospheric pressure P1,

- closing the valve,

- moving the plunger in the syringe with volume $V_{syri}$ using the electric drive from a starting position $L_0$ for detecting atmospheric pressure P1 to a pressure detection position $L_d$ for detecting pressure P2 using the pressure sensor,

- using the processor to calculate the fraction x for the plunger movement as $x = (L_d - L_o)/L_{max}$ whereby $L_{max}$ represents the maximum available plunger movement in the syringe,

- using the processor to calculate the theoretical pressure P2** for the given plunger movement for different syringe sizes $V_{syr}$ configured to be used in the analytical instrument using the same constant volume $V_c$ from the above non-linear modification of Boyle's law as:

$$P2** = P1(V_{syr} + V_c)/(V_{syr}(1-x) + V_c)$$

- preparing a list of the theoretical pressures P2** for the different syringe sizes $V_{syr}$ and optionally store the list in a lookup table in a storage device in the control unit,

- comparing the theoretical pressures P2** for the given plunger movement for the different syringe sizes $V_{syr}$ with the detected pressure P2 for the installed syringe having volume $V_{syri}$, and,

identify the syringe size $V_{syr}$ with a theoretical pressure P2** that equals the detected pressure P2 for the installed syringe $V_{syri}$, and automatically recalibrate the syringe pump by adjusting the parameters for the electric drive driving the syringe pump according to the identified syringe size using the lookup table if the theoretical pressure P2** deviates from the detected pressure P2. The pressure P1 may be atmospheric pressure or a starting pressure P1 during plunger movement that is below the pressure level P2.

The method wherein the plunger in the syringe is advanced by a plunger rod driven by the electric drive comprising a stepper motor and the forward movement of the plunger rod is controlled by the number of commutating steps directed to the stepper motor thereby defining a pressure sweep P2-P1 and the number of commutating steps required for the pressure sweep is listed in the lookup table for each syringe size $V_{syr}$.

Adjusting the parameters for driving the syringe pump includes linking the number of commutating steps of the electric motor of the electric drive to the syringe size $V_{syr}$ where there is a match between the theoretical pressures P2** and the detected pressure P2 using the lookup table thereby correcting the pressure sweep.

The controller of the control unit may additionally or complementary monitor the motor current MC used by the stepper motor for keeping the plunger in the pressure detection position $L_d$ and the lookup table may include predefined motor current values MC* that are attributed to each syringe size $V_{syr}$ for the keeping the plunger in the pressure detection position. The syringe pump is recalibrated a) if the received motor current MC deviates from the predefined motor current value MC* and/or b) when the difference in theoretical pressures P2** in the lookup table between two subsequent syringe sizes $V_{syr}$ is in the same order of magnitude as the tolerance level of the pressure sensor.

The method wherein recalibration the syringe pump includes attributing the number of commutating steps for the electric motor to the syringe size $V_{syr}$ where there is a match between the predefined motor current value MC* and the received motor current value MC by the processor.

Another aspect of the invention relates to a computer program for detecting the size of a syringe in an analytical instrument, the computer program when executed by the processor that is part of the analytical instrument is adapted to execute the previously described method steps.

Another aspect relates to a computer readable medium in which the computer program is stored. The computer readable medium may be a disc, USB stick or a hard drive. The computer readable medium may be part of a cloud solution.

BRIEF DESCRIPTION OF THE DRAWINGS

Embodiments of the present invention are described in more detail with reference to the attached drawings presenting:

Figure 1: Schematic representation of an analytical instrument having a syringe size identification functionality,

Figure 2a: Schematic drawing of a syringe pump with a syringe, an electric drive, a valve, a pressure sensor connected to the outlet of the syringe with a constant volume $V_c$ between the syringe outlet and the valve. The syringe pump being filled with air at atmospheric pressure and the plunger at initial position Lo,

Figure 2b: Syringe pump of Figure 2a with closed valve, the plunger has been moved to the pressure detection position $L_d$ by the electric drive,

Figure 3: Syringe pump of Figure 2a after replacement of the syringe with a different size,

Figure 4: Longitudinal section of a rotary valve,

Figure 5: Cross sectional view of the rotary valve of Figure 4, valve in open position,

Figure 6: Cross sectional view of the rotary valve of Figure 4, valve in closed position,

Figure 7: Theoretical pressure P2** for a range of syringe sizes,

Figure 8: Reaction force for retaining the plunger in the pressure detection position,

Figure 9: Block diagram for the method for detecting the size in the analytical instrument.

DETAILED DESCRIPTION OF EXEMPLARY EMBODIMENTS

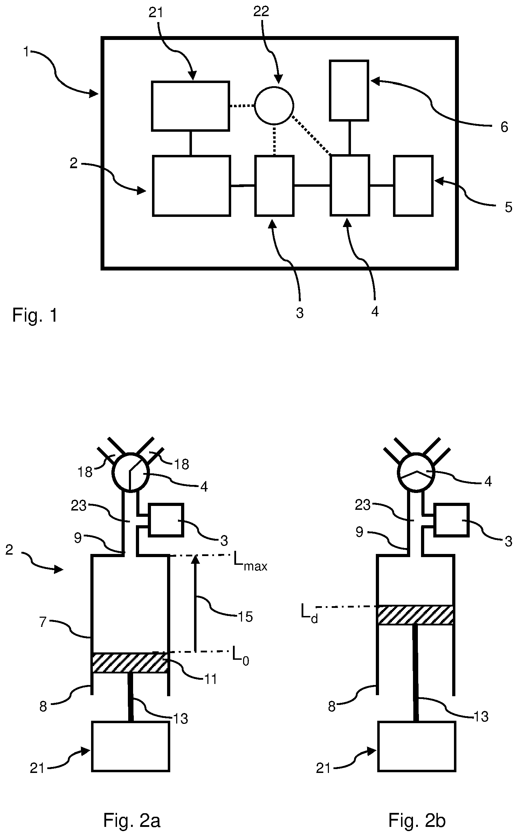

Figure 1 shows a schematic representation of an analytical instrument 1 with a syringe identification functionality with a syringe pump 2, a pressure sensor 3 and a valve 4. The syringe pump 2 may be prefilled or may be fluidly connected to a container providing the liquid supply. The syringe pump 2 is driven by an electric drive 21 which includes an electric motor, for example a stepper motor. The electric drive may include a gearing mechanism for gearing up or gearing down the rotation of the drive axle of the electric motor. The pressure sensor 3 is located between the valve 4 and an outlet of the syringe pump 2. The valve 4 may be a multi-port valve for selecting between, for example, a waste container 6 or fluidly connecting the syringe pump 2 to a testing device such as a HPLC device 5. Alternatively, the testing device is a GC or GC-MS device. Instead of a testing device 6 also a solid phase extraction device may be used, or a DNA synthesizer or liquid may be supplied to a bioreactor or a DNA sequencer. The analytical instrument 1 may include a robot for liquid handling and moving labware on a working table of the analytical instrument. The analytical instrument may be part of the laboratory automation apparatus. The analytical instrument 1 includes a control unit 22 which is operatively coupled at least to the electric drive 21, the pressure sensor 3 and the valve 4. The control unit 22 may control further units of the analytical instrument such as, for example, the robot for the liquid handling. The control unit includes a processor or microprocessor and at least a storage unit. The control unit may optionally include a communication unit with a transceiver for wireless communication to an external device. The control unit 22 may be connected to a user interface for directing visual or acoustic signals to the user. The control unit 22 may receive or monitor the data from the pressure sensor 3 that correlate to the detected pressures and/or the control unit may receive or monitor the motor current MC required for advancing to and retaining the plunger rod in a certain position in the barrel of a syringe as will be explained below in Figure 2b. The control unit is furthermore configured to control the electric drive 21 and the valve 4 in that the control unit can start/stop the electric motor and define the commutation of the motor. The control unit is configured to open or close the valve, for example by using a solenoid actuator or using a separate stepper motor for rotating the rotor of a rotary valve.

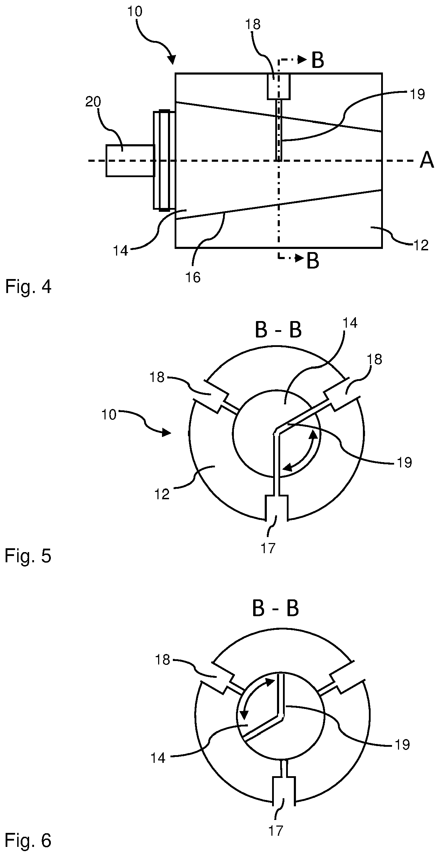

Figure 2a presents a schematic drawing for a syringe pump 2 for use in the analytical instrument 1 with the valve 4 and pressure sensor 3 connected to an outlet 9 of a syringe 7 and the pressure sensor 3 is located between the outlet 9 and the valve 4. A three-way rotary valve 4 is presented in Figure 2a with an inlet connected to the outlet 9 of the syringe 7 and a rotor that may select between one of the two outlets 18. Alternative options for the valve 4 may include a solenoid valve. Further details for the three-way rotary valve are presented below in Figures 4 to 6.

The syringe 7 in Figure 2a includes a barrel 8 with an opening for receiving a plunger 11. The barrel 8 has a cylindrical shape and the center of the barrel defines a Z-axis. The barrel 8 defines the syringe volume $V_{syri}$ for the installed syringe in the syringe pump. The plunger 11 can be moved along the Z-axis towards the outlet 9 of the syringe by a plunger rod 13. The plunger rod is driven by the electric drive 21. The electric drive includes the stepper motor and a gearing mechanism for gearing up or down the rotation of the drive axle of the electric motor. The gearing mechanism is operatively coupled to the plunger rod 13 for driving the plunger 11 in the syringe. The plunger 11 in Figure 2a is located at the starting position $L_0$ and the valve 4 is open such that air can flow into the syringe and the pressure sensor 3 detects atmospheric pressure P1. The syringe pump 2 includes a constant volume $V_c$ 23 defined by the volume of the outlet 9 of the syringe, the tubing connecting the outlet 9 to the valve 4 and the sensor 3 (in the example in Figure 2a represented as a T-shaped connector), and the dead volumes present in the valve and sensor respectively. The syringe 7 includes a shoulder section connecting the barrel 8 to the outlet 9 and the shoulder section provides a hard stop for the movement of the plunger 11 and thereby defines the maximum travel path $L_{max}$ 15 for the syringe.

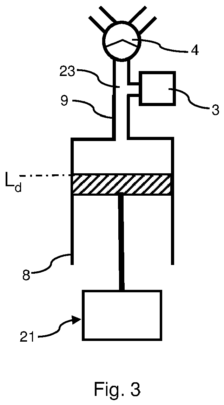

The valve 4 is closed in Figure 2b and the electric drive 21 has advanced the plunger 11 to a pressure detection position $L_d$ thereby compressing the air that was initially present in the syringe with size $V_{syri}$ and in the constant volume $V_c$ 23. The pressure sensor 3 detects the pressure P2 for the compressed air. The electric drive has advanced the plunger rod 13 according to the number of steps that were directed by the control unit 22 to the stepper motor in the electric drive. The number of steps required for advancing the plunger rod 13 thereby correlates to the pressure sweep P2-P1 that can be provided and the number of steps is thus linked to the size (for example internal diameter) of the installed syringe. A syringe with a larger diameter is presented in Figure 3 and the same plunger movement from $L_0$ to $L_d$ as presented in Figure 2b will lead to a higher internal pressure P2. In the state of the art, the user may correct the controller by programming a different number of commutating steps using the user interface, or an automatic recalibration utilizes the color-coded syringes in combination with optical sensors as presented in US20210121885A1. In the example of Figure 3, less commutating steps for the electric motor are required for reaching the same pressure level as presented in Figure 2b. The present disclosure refers to an automatic recalibration of the analytical system or apparatus using the existing firmware as will be presented further below.

An example for the valve 4 is a rotary valve 10 as presented in Figures 4, 5 and 6. The rotary valve 10 includes a conical shaped rotor member 14 that fits into a conical shaped passage 16 of a stator member 12. The rotor member 14 can rotate around axis A to different rotational positions for selectively coupling an inlet 17 in the stator 12 via a channel in the rotor 14 to one of a plurality of outlets 18 of the stator. The inlet 17 may be coupled to the outlet of the syringe. The rotor member 14 includes an axle 20 that is coupled to, or may be coupled to a drive mechanism for rotating the rotor member 14 with respect to the stator member 12 to predefined angular positions. A cross sectional view B-B of the rotary valve 10 of Figure 4 is presented in Figure 5. The rotor 14 includes a channel 19 selectively coupling the inlet 17 via the rotor channel 19 to an outlet 18 (Figure 5). The valve is closed when the rotor member 14 is rotated to a rotary position where the channel 19 is unable to couple the inlet 17 to one of the outlets 18. The rotor 14 and/or the stator member may be constructed from a polymeric material. Alternatively, the rotor and/or stator member may be constructed from a ceramic material.

The syringe size identification functionality will be explained for the following range of syringe sizes: 50 $\mu$l, 100 $\mu$l, 250 $\mu$l, 1000 $\mu$l, 2500 $\mu$l and 5000 $\mu$l. The constant volume $V_c$ 23 occupied by the tubing, valve and sensor amounts to 74 $\mu$l in this exemplary embodiment.

Table 1: Syringe sizes and added volume $V_c$

| $V_{syr}$ ($\mu$l) | $V_c$ ($\mu$l) | $V_{syr}$ +$V_c$ ($\mu$l) | Ratio $V_c/V_{syr}$ |
|---|---|---|---|
| 50 | 74 | 124 | 1.48 |
| 100 | 74 | 174 | 0.74 |
| 250 | 74 | 324 | 0.30 |
| 1000 | 74 | 1074 | 0.07 |
| 2500 | 74 | 2574 | 0.03 |
| 5000 | 74 | 5074 | 0.01 |

The calculation of the fraction x from the distance $L_d$ travelled in the syringe is listed in Table 2

Table 2: Calculation of the fraction x for the movement of the plunger

| distance (mm) | $L_d$ (mm) | x |
|---|---|---|
| 30 | 0 | 0 |
| 25 | 5 | 0.167 |
| 20 | 10 | 0.333 |
| 15 | 20 | 0.5 |
| 10 | 30 | 0.667 |

The theoretical pressures P2** are calculated according to the modified Boyle's equation:

$$P2** = P1(V_{syr} + V_c)/(V_{syr}(1-x) + V_c)$$

The theoretical pressures P2** for the 50 µl and 5000 µl syringes are listed in the following tables for a constant volume $V_c$ of 74 µl and an initial pressure P1 of 1 Bar.

Table 3: Calculation of the theoretical pressure P2** for a 50 µl syringe

| 50 µl / x | $(V_{syr}(1-x) + V_c)$ | $P1(V_{syri} + V_c)$ | P2** (Bar) |
|---|---|---|---|
| 0 | 124.00 | 124.00 | 1.00 |
| 0.167 | 115.67 | 124.00 | 1.07 |
| 0.333 | 107.33 | 124.00 | 1.16 |
| 0.5 | 99.00 | 124.00 | 1.25 |
| 0.667 | 90.67 | 124.00 | 1.37 |

Table 4: Calculation of the theoretical pressure P2** for a 5000 µl syringe

| 5000 µl / x | $(V_{syr}(1-x) + V_c)$ | $P1(V_{syri} + V_c)$ | P2** (Bar) |
|---|---|---|---|
| 0 | 5074.00 | 5074.00 | 1.00 |
| 0.167 | 4240.67 | 5074.00 | 1.20 |
| 0.333 | 3407.33 | 5074.00 | 1.49 |
| 0.5 | 2574.00 | 5074.00 | 1.97 |
| 0.667 | 1740.67 | 5074.00 | 2.91 |

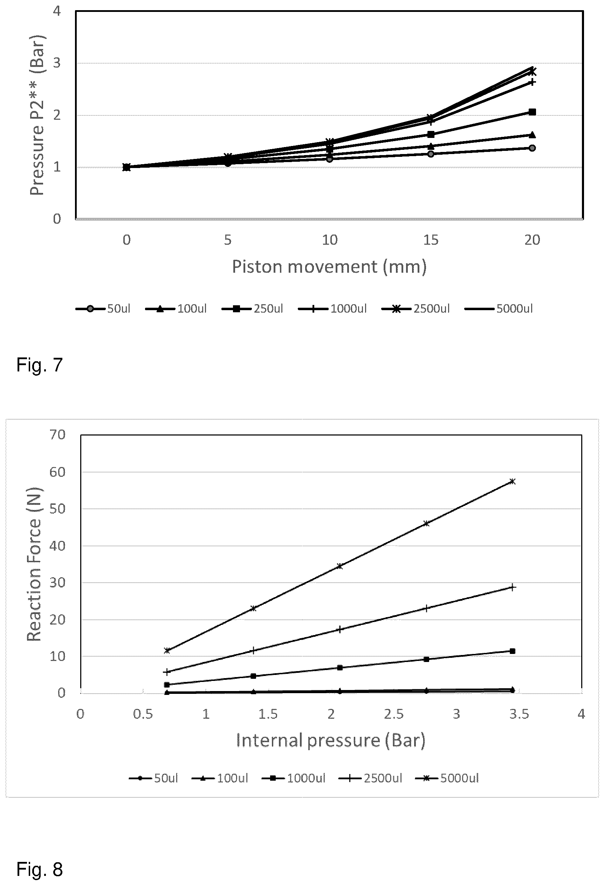

The theoretical pressures P2** for the range of different syringe sizes is presented in the table 5 below and graphically displayed in Figure7:

Table 5: Theoretical pressure P2** (Bar) for a range of syringe sizes;

| x | 50 µl | 100 µl | 250 µl | 1000 µl | 2500 µl | 5000 µl |
|---|---|---|---|---|---|---|
| 0 | 1.00 | 1.00 | 1.00 | 1.00 | 1.00 | 1.00 |
| 0.167 | 1.07 | 1.11 | 1.15 | 1.18 | 1.19 | 1.20 |
| 0.333 | 1.16 | 1.24 | 1.35 | 1.45 | 1.48 | 1.49 |
| 0.5 | 1.25 | 1.40 | 1.63 | 1.87 | 1.94 | 1.97 |
| 0.667 | 1.37 | 1.62 | 2.06 | 2.64 | 2.84 | 2.91 |

The difference in theoretical pressures P2** between two subsequent syringe sizes for a given fraction of the plunger movement x decreases for larger syringe sizes. The theoretical pressure difference between a 100 $\mu$l and 50 $\mu$l syringe amounts 0.25 Bar for plunger movement x = 0.667 whereas the theoretical pressure difference amounts 0.07 Bar between a 5000 $\mu$l and 250 $\mu$l syringe for the same plunger movement. This is affected by the fact that the ratio between the constant volume $V_c$ and the syringe volume $V_{syr}$ reduces with increasing syringe size. Once the variation in the effectively detected pressure P2, which is defined by the accuracy of the pressure sensor, is within the range of the difference in theoretical pressure P2** between two subsequent syringe sizes, then the syringe size identification functionality may not benefit from the calculated pressures P2**.

The motor current MC used for driving the stepper motor is monitored by the control unit and the motor current may be used for distinguishing between different syringe sizes as well. The plunger 11 is moved forward from the starting position $L_0$ to the pressure detection position $L_d$ thereby compressing the air in the syringe since the valve 4 is in the closed position. The compressed air will provide a reactive force F (in Newtons) which can be calculated by multiplying the surface area of the plunger ($mm^2$) with the pressure (1 Bar equals 0.1 $N/mm^2$) and the results are presented in Figure 8. The difference in reactive force between two subsequent syringe sizes increases with increasing size contrary to the difference in pressure P2** which decreases with increasing size (Figure 7). The motor current MC required for maintaining the plunger in the pressure detection position $L_d$ may be capable of distinguishing between different syringe sizes where the accuracy of the pressure sensor limits the use of the pressure calculation method.

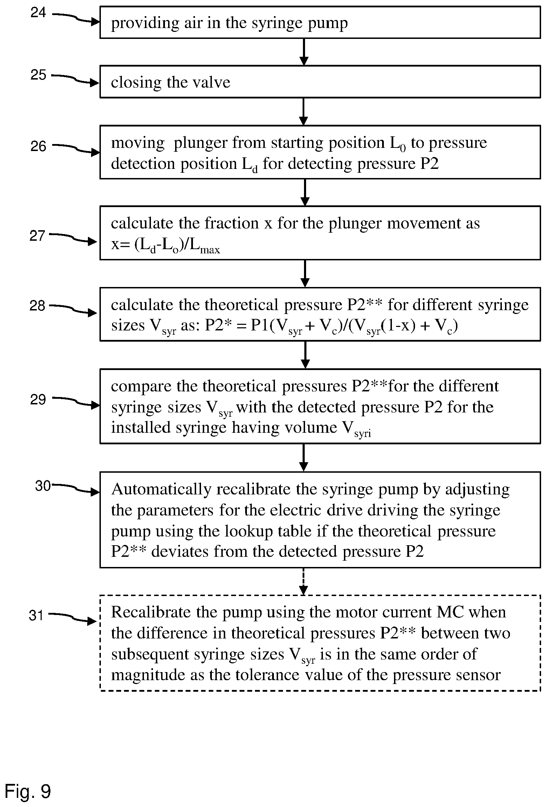

The method steps for detecting the size of a syringe in an analytical system including the syringe pump 2, the valve 4, the pressure sensor 3, the controller 22 and the electric drive 21 are presented in the block diagram in Figure 9.

The method comprising the following steps:

- Step 24: Providing air in the syringe pump at atmospheric pressure P1,

- Step 25: Closing the valve,

- Step 26: Moving the plunger in the syringe with volume $V_{syri}$ using the electric drive from a starting position $L_0$ for detecting atmospheric pressure P1 to a pressure detection position $L_d$ for detecting pressure P2 using the pressure sensor,

- Step 27: Using the processor to calculate the fraction x for the plunger movement as x= $(L_d-L_o)/L_{max}$ whereby $L_{max}$ represents the maximum available plunger movement in the syringe,

- Step 28: Using the processor to calculate the theoretical pressure P2** for the given plunger movement for different syringe sizes $V_{syr}$ configured to be used in the analytical instrument using the same constant volume $V_c$ as:

$$P2^{**} = P1(V_{syr} + V_c)/(V_{syr}(1\text{-}x) + V_c)$$

preparing a list of the theoretical pressures P2** for the different syringe sizes and store the list in a lookup table in the storage device.

- Step 29: Comparing the theoretical pressures P2** for the given plunger movement for the different syringe sizes $V_{syr}$ with the detected pressure P2 for the installed syringe having volume $V_{syri}$, and,

- Step 30: Automatically recalibrate the syringe pump by adjusting the parameters for the electric drive driving the syringe pump using the lookup table if the theoretical pressure P2** deviates from the detected pressure P2.

The plunger in the syringe pump is advanced by a plunger rod driven by the electric drive including a stepper motor and the forward movement of the plunger rod is controlled by the number of commutating steps directed to the stepper motor thereby defining a pressure sweep P2-P1 and the number of commutating steps required for the pressure sweep is listed in the lookup table for each syringe size $V_{syr}$. Furthermore, adjusting the parameters for driving the syringe pump includes attributing the number of commutating steps to be directed to the electric motor to the syringe size $V_{syr}$ where there is a match between the theoretical pressures P2** and the detected pressure P2 using the lookup table. The pressure sweep is corrected if there is a mismatch between the detected pressure and the calculated pressure. The pressure sweep may start with pressure P1 representing atmospheric pressure or, alternatively pressure P1 is for an already compressed gas in the syringe pump with a P1 value that is below P2.

The method may include an optional step:

- Step 31: The method wherein the controller receives the motor current MC used by the stepper motor for keeping the plunger in the pressure detection position $L_d$ and wherein the lookup table includes predefined motor current values MC* that are attributed to each syringe size $V_{syr}$ and the syringe pump is recalibrated if a) the received motor current MC deviates from the predefined motor current value MC* and b) when the difference in theoretical pressures P2** in the lookup table between two subsequent syringe sizes $V_{syr}$ is in the same order of magnitude as the tolerance value of the pressure sensor.

LIST OF REFERENCE SIGNS

| | |
|---|---|
| 1 | Analytical instrument |
| 2 | Syringe pump |
| 3 | Pressure sensor |
| 4 | Valve |
| 5 | HPLC |
| 6 | Waste container |
| 7 | Syringe |
| 8 | Barrel |
| 9 | Outlet |
| 10 | Rotary valve |
| 11 | Plunger |
| 12 | Stator member |
| 13 | Plunger rod |
| 14 | Rotor member |
| 15 | Maximum travel path $L_{max}$ |
| 16 | Conical passage |
| 17 | Inlet |
| 18 | Outlet |
| 19 | Channel |
| 20 | Axle |
| 21 | Electric drive |
| 22 | Control unit, processor |
| 23 | Constant volume Vc |
| 24 | Method step for syringe |
| 25 | Method step for valve closure |
| 26 | Method step for plunger movement |
| 27 | Method step for calculation x |
| 28 | Step for pressure P2** calculation |
| 29 | Method step for comparison of pressure |
| 30 | Method step for recalibration |
| 31 | Method step for using motor current |
| A | Rotor axis |

**Claims**

1. An analytical instrument (1) having a syringe size identification functionality comprising:

    - a syringe pump (2) with an installed syringe (7) having a size $V_{syri}$ ,
    - an electric drive (21) for advancing or retracting a plunger (11) in the syringe (7),
    - a valve (4, 10) located downstream of the syringe (7),
    - a pressure sensor (3) located between the syringe (7) and the valve (4),
    - a known and constant volume $V_c$ (23) defined by the downstream volume between the syringe (7) and the valve (4,10),
    - a processor (22) operatively connected to the valve (4, 10), the pressure sensor (3) and the electric drive (21),

    wherein the processor (22) is configured to:

    - control the electric drive for moving the plunger (11) from a position $L_0$ for detecting atmospheric air pressure P1 to a pressure detection position $L_d$ for detecting compressed air pressure P2 using the pressure sensor (3),
- calculate the fraction x for the plunger movement to the pressure detection position $L_d$ as:

$$x = (L_d-L_0)/L_{max}$$

whereby $L_{max}$ represents the maximum available plunger movement available in the syringe,
- calculate the theoretical pressure P2* for the plunger movement to $L_d$ in the installed syringe using a modified version of Boyle's law:

$$P2^* = P1(V_{syri} + V_c)/(V_{syri}(1-x) + V_c)$$

- compare the theoretical pressure P2* with the detected pressure P2, and
if the theoretical pressure P2* equals the detected pressure P2 then release the analytical system with installed syringe $V_{syri}$ for use, and
if the theoretical pressure P2* deviates from the detected pressure P2 then compare the detected pressure P2 with a lookup table stored in a storage device of the processor, the lookup table comprising theoretical pressures P2** attributed to a list of different syringe sizes $V_{syr}$ to be used in the syringe pump (2), and recalibrate the syringe pump (2) by adjusting the parameters for the electric drive (21) according to the syringe size $V_{syr}$ where there is a match between the theoretical pressures P2** from the lookup table and the detected pressure P2.

2. The analytical instrument according to claim 1 wherein the theoretical pressures P2** attributed to a list of different syringe sizes $V_{syr}$ are calculated according to the modified version of Boyle's law as:

$$P2^{**} = P1(V_{syr} + V_c)/(V_{syr}(1-x) + V_c).$$

3. The analytical instrument according to claim 2, wherein the plunger (11) in the syringe (7) is advanced by a plunger rod (13) driven by the electric drive (21) comprising a stepper motor.

4. The analytical instrument according to claim 3, wherein the forward movement of the plunger rod (13) is controlled by the number of commutating steps directed to the stepper motor thereby defining a pressure sweep P2-P1 and the number of commutating steps required for the pressure sweep is listed in the lookup table for each syringe size $V_{syr}$.

5. The analytical instrument according to any of the previous claims wherein recalibration comprises attributing the number of commutating steps of the electric motor to the syringe size $V_{syr}$ where there is a match between the theoretical pressures P2** and the detected pressure P2.

6. The analytical instrument according to any of the previous claims wherein the known constant volume $V_c$ (23) is defined by the tubing or connectors connecting the syringe (7) to the valve (4,10), the dead volume in the valve and the dead volume in the pressure sensor (3).

7. The analytical instrument according to any of the previous claims wherein the syringe pump (2) is filled with air for the syringe size identification testing.

8. The analytical instrument according to any of the previous claims wherein the controller (22) monitors the motor current MC used by the stepper motor for keeping the plunger (11) in the pressure detection position $L_d$.

9. The analytical instrument according to claim 8 wherein the lookup table comprises predefined motor current values MC* that are attributed to each syringe size $V_{syr}$ and the syringe pump (2) is recalibrated if the received motor current MC deviates from the predefined motor current value MC* and when the difference in theoretical pressures P2** in the lookup table between two subsequent syringe sizes $V_{syr}$ is in the same order of magnitude as the tolerance value of the pressure sensor (3).

10. The analytical instrument according to claim 9 wherein recalibration the syringe pump comprises attributing the number of commutating steps of the electric motor to the syringe size $V_{syr}$ where there is a match between the predefined motor current value MC* and the received motor current value MC.

**11.** A method for detecting the size of a syringe in an analytical instrument (1) comprising:

- a syringe pump (2) with an installed syringe (7) having a volume $V_{syri}$,
- a valve (4,10) located downstream of the syringe (7),
- a pressure sensor (3) located between the valve (4) and the syringe (7),
- a known and constant volume $V_c$ (23) representing the downstream volume between the syringe (7) and the valve (4),
- an electric drive (21) for advancing or retracting a plunger (11) in the syringe (7),
- and a controller (22) comprising a processor for controlling the analytical instrument (1);

the method comprising the following steps:

- (24) providing air in the syringe pump (2) at atmospheric pressure P1,
- (25) closing the valve (4),
- (26) moving the plunger (11) in the syringe with volume $V_{syri}$ using the electric drive (21) from a starting position $L_0$ for detecting atmospheric pressure P1 to a pressure detection position $L_d$ for detecting pressure P2 using the pressure sensor (3),
- (27) using the processor (22) to calculate the fraction x for the plunger movement as $x = (L_d-L_o)/L_{max}$ whereby $L_{max}$ represents the maximum available plunger movement in the syringe (7),
- (28) using the processor (22) to calculate the theoretical pressure P2** for the given plunger movement for different syringe sizes $V_{syr}$ configured to be used in the analytical instrument (1) using the same constant volume $V_c$ (23) using a modified version of Boyle's law as:

$$P2** = P1(V_{syr} + V_c)/(V_{syr}(1-x) + V_c)$$

preparing a list of the theoretical pressures P2** for the different syringe sizes and store the list in a lookup table in a storage device of the controller (22),
- (29) comparing the theoretical pressures P2** for the given plunger movement for the different syringe sizes $V_{syr}$ with the detected pressure P2 for the installed syringe having volume $V_{syri}$, and,
- (30) automatically recalibrate the syringe pump (2) by adjusting the parameters for the electric drive (21) driving the syringe pump using the lookup table if the theoretical pressure P2** deviates from the detected pressure P2.

**12.** The method according to claim 11, wherein the plunger (11) in the syringe (7) is advanced by a plunger rod (13) driven by the electric drive (21) comprising a stepper motor and the forward movement of the plunger rod (13) is controlled by the number of commutating steps directed to the stepper motor thereby defining a pressure sweep P2-P1 and the number of commutating steps required for the pressure sweep is listed in the lookup table for each syringe size $V_{syr}$.

**13.** The method according to claim 12, wherein adjusting the parameters for driving the syringe pump (2) comprises attributing the number of commutating steps of the electric motor to the syringe size $V_{syr}$ where there is a match between the theoretical pressures P2** and the detected pressure P2 using the lookup table thereby correcting the pressure sweep.

**14.** The method according to claim 13, wherein the controller (22) monitors the motor current MC used by the stepper motor for keeping the plunger in the pressure detection position $L_d$ and wherein the lookup table comprises predefined motor current values MC* that are attributed to each syringe size $V_{syr}$ and the syringe pump (2) is recalibrated if the received motor current MC deviates from the predefined motor current value MC* and when the difference in theoretical pressures P2** in the lookup table between two subsequent syringe sizes $V_{syr}$ is in the same order of magnitude as the tolerance value of the pressure sensor.

**15.** The method according to claim 14 wherein recalibration the syringe pump (2) comprises attributing the number of commutating steps for the electric motor to the syringe size $V_{syr}$ where there is a match between the predefined motor current value MC* and the received motor current value MC.

**16.** A computer program for detecting the size of a syringe in an analytical system, the computer program when executed by the processor that is part of the analytical instrument is adapted to execute the method of claims 11 to 15.

Fig. 1

Fig. 2a

Fig. 2b

Fig. 3

Fig. 4

Fig. 5

Fig. 6

Fig. 7

Fig. 8

24 → providing air in the syringe pump

25 → closing the valve

26 → moving plunger from starting position $L_0$ to pressure detection position $L_d$ for detecting pressure P2

27 → calculate the fraction x for the plunger movement as $x = (L_d-L_o)/L_{max}$

28 → calculate the theoretical pressure P2** for different syringe sizes $V_{syr}$ as: $P2^* = P1(V_{syr} + V_c)/(V_{syr}(1-x) + V_c)$

29 → compare the theoretical pressures P2**for the different syringe sizes $V_{syr}$ with the detected pressure P2 for the installed syringe having volume $V_{syri}$

30 → Automatically recalibrate the syringe pump by adjusting the parameters for the electric drive driving the syringe pump using the lookup table if the theoretical pressure P2** deviates from the detected pressure P2

31 → Recalibrate the pump using the motor current MC when the difference in theoretical pressures P2** between two subsequent syringe sizes $V_{syr}$ is in the same order of magnitude as the tolerance value of the pressure sensor

Fig. 9

Europäisches
Patentamt
European
Patent Office
Office européen
des brevets

# EUROPEAN SEARCH REPORT

**Application Number**

EP 24 18 2180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 608 640 A1 (UNIPIX SARL [CH]) 12 February 2020 (2020-02-12) * column 8, lines 33-40; figures 1-11 * * column 9, lines 16-30 * * column 9, line 60 - column 10, line 16 * ----- | 1-16 | INV. B01L3/02 G01F11/029 |
| A | US 8 114 361 B2 (REICHMUTH BURKHARDT [DE]; EPPENDORF AG [DE]) 14 February 2012 (2012-02-14) * paragraphs [0032], [0033], [0069]; figures 1-3f * ----- | 1-16 | |
| A | US 7 662 133 B2 (SMITH & NEPHEW INC [US]) 16 February 2010 (2010-02-16) * column 12, line 47 - column 13, line 10; figure 12 * ----- | 1-16 | |
| | | | TECHNICAL FIELDS SEARCHED (IPC) |
| | | | B01L G01N F04B G01F |

The present search report has been drawn up for all claims

| Place of search | Date of completion of the search | Examiner |
|---|---|---|
| The Hague | 21 November 2024 | Pessenda García, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 18 2180

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | | Publication date | Patent family member(s) | | Publication date |
|---|---|---|---|---|---|
| EP 3608640 | A1 | 12-02-2020 | CH | 715253 A2 | 14-02-2020 |
| | | | EP | 3608640 A1 | 12-02-2020 |
| US 8114361 | B2 | 14-02-2012 | CN | 101850278 A | 06-10-2010 |
| | | | DE | 102009016590 A1 | 07-10-2010 |
| | | | EP | 2236207 A1 | 06-10-2010 |
| | | | US | 2010266454 A1 | 21-10-2010 |
| US 7662133 | B2 | 16-02-2010 | AU | 2004216181 A1 | 10-09-2004 |
| | | | EP | 1596905 A2 | 23-11-2005 |
| | | | EP | 2489378 A1 | 22-08-2012 |
| | | | JP | 4741460 B2 | 03-08-2011 |
| | | | JP | 2006518647 A | 17-08-2006 |
| | | | US | 2004193045 A1 | 30-09-2004 |
| | | | US | 2010094229 A1 | 15-04-2010 |
| | | | US | 2012065594 A1 | 15-03-2012 |
| | | | WO | 2004075954 A2 | 10-09-2004 |

EPO FORM P0459

For more details about this annex : see Official Journal of the European Patent Office, No. 12/82

**REFERENCES CITED IN THE DESCRIPTION**

**Patent documents cited in the description**

- US 20210121885 A1